Europäisches Patentamt

European Patent Office

Office européen des brevets

(11) Publication number: **0 264 775 B1**

(12) **EUROPEAN PATENT SPECIFICATION**

(45) Date of publication of patent specification: **19.02.92** (51) Int. Cl.⁵: **G11B 21/12**, G11B 21/21

(21) Application number: **87114917.5**

(22) Date of filing: **13.10.87**

(54) **A disk file including a head load/unload mechanism.**

(30) Priority: **16.10.86 US 919739**

(43) Date of publication of application:
**27.04.88 Bulletin 88/17**

(45) Publication of the grant of the patent:
**19.02.92 Bulletin 92/08**

(84) Designated Contracting States:
**DE FR GB**

(56) References cited:
**US-A- 3 634 836**
**US-A- 4 605 979**

**IBM TECHNICAL DISCLOSURE BULLETIN, vol. 15, no. 9, February 1973, page 2750, New York, US; R.A. WILKINSON, Jr.: "Retraction device for magnetic transducer assembly"**

**IBM TECHNICAL DISCLOSURE BULLETIN, vol. 18, no. 9, February 1976, pages 3018-3019, New York, US; S.E. WHEELER: "Magnetic head load/unload device"**

(73) Proprietor: **International Business Machines Corporation**
**Old Orchard Road**
**Armonk, N.Y. 10504(US)**

(72) Inventor: **Chew, David William**
**1640 Merced Street**
**Richmond California 94804(US)**
Inventor: **Hagenlocher, Willi Adolf**
**8003 Pumpkin Court**
**Cupertino California 95014(US)**
Inventor: **Jih, Chentung Robert**
**106 Madera Court**
**Los Gatos California 95030(US)**
Inventor: **Nassimbene, Ernie George**
**515 Miramar Drive**
**Santa Cruz California 95060(US)**

(74) Representative: **Moss, Robert Douglas**
**IBM United Kingdom Limited Intellectual Property Department Hursley Park**
**Winchester Hampshire SO21 2JN(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

This invention relates to a rotating disk file of the type in which the read/write transducer comprises an air-bearing slider which "flies" above the disk surface when the disk is rotating at its operating speed, and in particular to a head load/unload mechanism in such a disk file.

In conventional rotating disk files, the read/write transducer or head is supported on a slider which rides on a cushion or bearing of air above the disk surface when the disk is rotating at its operating speed. The slider is attached to the rigid support arm of a linear or rotary actuator by means of a relatively fragile suspension. In large capacity magnetic recording disk files there is generally a stack of rigid disks and a number of actuators. Each actuator contains a number of arms, and each arm may support a number of suspensions. The actuators move the sliders radially between the disks so that each head may access the recording area of a respective disk surface.

In these conventional disk files the sliders are biased against the disk surfaces by a small force from the suspensions when the disks are not rotating. The sliders are thus in contact with the disk surfaces from the time the disk file is turned on until the disks reach a rotational speed sufficient to cause the sliders to generate the air-bearing support. The sliders are again in contact with the disk surfaces when the disk file is turned off and the rotational speed of the disks falls below that necessary to maintain the air-bearings. In such disk files a liquid lubricant is often maintained on the disk surfaces to prevent damage to the heads and the disks during starting and stopping of the disk.

A serious problem with disk files of this type is that after the sliders have been in stationary contact with the disk surfaces for even a short period of time, the sliders tend to resist translational movement or "stick" to the disk surfaces. This "stiction" is caused by a variety of factors, including static friction and viscous shear forces, and surface tension created by the lubricant between the disks and the sliders. Even in those disk files which have disks with extremely smooth disk surfaces without a liquid lubricant, stiction may occur because of the strong intermolecular attraction at the interface between the smooth surfaces of the disks and the sliders. This stiction can result in damage to the heads, the relatively fragile suspensions or the disks when the sliders suddenly break free from the disks when disk rotation is initiated.

An additional problem in such disk files is that because the sliders are in contact with the disks when the disks are not rotating and because the suspensions are designed to flex in a generally perpendicular direction relative to the disks, the sliders and the data surfaces of the disks can be damaged if the sliders suddenly impact the disks, such as may occur during shipping of the disk file.

It is thus desirable to incorporate into these conventional disk files some type of device which, at file turn off, "unloads" the sliders away from the disks while the sliders are still supported on air-bearings, and, at file start up, "loads" the sliders toward the disks when the disks have reached a rotational speed sufficient to generate the air-bearings.

One prior art technique for achieving this is shown in US 4,571,648 (Barski). This discloses a mechanism for unloading a pair of adjacent suspensions, each carrying a read/write head. A wire passes through a hole in each suspension and when this wire is pulled taut it causes the suspensions to flex towards each other and consequently away from their respective disk surfaces. This technique has numerous disadvantages, among these being material shedding as the wire slides across the edge of the hole in each suspension, poor control over the load/unload process due to stiction between the wire and each hole, and limited reliability due to wear and consequent failure of the wire.

An alternative prior art technique for achieving this is shown in US 3,634,836 (Huetten). This discloses a head positioning mechanism including a load/unload device which includes a number of rods and head-supporting arms, one rod running inside each arm. Each rod passes between a pair of heads and has an opposed pair of localised depressions in the region of the heads. Each head has a projection on its side away from the relevant disk; this projection is arranged to line up with a depression in the rod when the head is unloaded from the disk. When it is desired to load the head to the disk surface, the rod is pushed in a direction parallel to its length so that the depressions on the rod no longer line up with the projections on the heads. By this means the heads are forced apart and hence towards contact with the relevant disk surface. This technique for head load/unload has the disadvantage that when the head is loaded it has no flexibility in its position relative to the disk surface, so that any irregularity in the disk surface is likely to cause the head to crash onto the disk surface with disastrous results. Also, tolerancing such a design would be very difficult since the height at which the head flew above the disk surface would depend directly on the mechanical tolerances of the rod, the head itself, the projection on the rear of the head and many other components, making manufacture of a high density disk drive, in which the flying height is very low indeed, almost impossible.

Yet another technique for loading/unloading a slider onto a magnetic disk is described in US 4,605,979 (Inoue). The slider is attached to one end of a load arm which is attached at its other end to a guide bar. In one embodiment, the loading/unloading mechanism takes the form of a tubular member slidably mounted on the guide bar. When unloading the slider, an inclined portion of the tubular member engages with projections formed on the guide bar thereby pivoting the slider away from the disk surface.

A similar technique is described in IBM Technical Disclosure Bulletin "Retraction Device for Magnetic Transducer Assembly", Vol. 15, No. 9, February 1973, page 2750. The retraction device is movable in a passageway in the arm which carries the transducer assemblies. When moved with respect to the arm, cam portions of the device contact portions of the suspensions that couple the transducer to the arm. Continued movement causes the suspensions to pivot against the arm thereby lifting the transducers from the disks.

The present invention provides a disk file comprising a rotatably mounted data storage disk, rotation means for rotating the disk, at least one air-bearing slider mounting a transducing head for reading data from the disk, a relatively rigid head support arm, a resilient suspension attaching the slider to the arm and being biased towards the disk to load the slider thereon and a head load/unload mechanism including a rigid elongated actuating member mounted on the support arm for longitudinal movement along said arm and a drive means for driving the actuating member to load and unload the head, the suspension and actuating member including complementary features which engage upon movement of the actuating member in a first direction to unload the slider by flexing the suspension against its bias and which disengage upon movement of the actuating member in the opposite direction to permit the suspension to flex with its bias, thereby to load the slider towards the disk, the disk file being characterised in that the complementary feature of the suspension is a hooked extension of the suspension and the complementary feature of the actuating member is a depression formed in the actuating member in such a way that the hooked extension lies in the depression at all times.

One embodiment of the present invention incorporates a slider "load/unload" device and includes means located on the actuator arm and movable in a direction generally parallel to the length of the suspensions for flexing the suspensions and therewith the sliders away from the disk, and means located on the suspension for engagement with the movable flexing means on the arm. Means are also provided on the arm for moving the suspension flexing means to a second disengaged position to permit the suspensions to return the sliders to their air-bearing relationship with the disks. The load/unload device allows the sliders to be moved toward the disk surfaces when the disks have reached the rotational speed sufficient to generate the air-bearings and away from the disks while the disks are still rotating above this minimum speed. While in the preferred embodiment the sliders are loaded and unloaded only when the rotational speed of the disks is sufficient to generate the air bearings, the load/unload device is fully capable of loading and unloading the sliders at a lower rotational speed which is too low to generate the air bearings but high enough to prevent stiction or even at a point when the disks are not rotating at all.

In the preferred embodiment of the invention, the suspension flexing means is an elongated rod located within a central longitudinal opening on the arm. The rod has openings or bores transverse to its length for receipt of hooks attached to the suspensions. The rod is moved to its first position by means of a lever having its pivot point attached to the arm and its mid-portion connected to an end of the rod. The rod is moved to its second position by means of a leaf spring attached to the arm and in contact with the end of the rod. When it is desired to unload the sliders, the actuator is moved to position the sliders to their radially outermost position on the disks while the disks are still rotating above the minimum speed needed to generate the air-bearings (or to merely avoid stiction if the sliders are to be unloaded while in contact with the disk surfaces). The lever is then rotated by a rotatable cam attached to the disk file base beyond the outer periphery of the disk. This causes the rod to engage the hooks on the suspensions and flex the suspensions away from the disks. When it is desired to load the sliders to the disks when the disks are rotating above the speed necessary to generate the air-bearings (or to merely avoid stiction if the sliders are to be loaded in contact with the disk surfaces), the rotatable cam is moved out of contact with the lever, thereby permitting the leaf spring to move the rod to its second position out of engagement with the hooks on the suspensions. This allows the suspensions to move the sliders toward the rotating disks.

The load/unload device included in the present invention is operable with disk files having a plurality of suspensions per arm and multiple arms per actuator. Because the leaf spring biases the rod out of contact with the hooks on the suspensions, inadvertent unloading of the sliders by the rod during periods of rapid acceleration of the actuator is prevented. Such rapid movement may occur during rapid track seeking or movement of the actuator to the disk file crash stops.

The load/unload device included in the present invention is easily assembled and requires minimal modification to existing actuator arms and suspensions. In addition, because the suspensions can be unloaded by rotation of the lever, the mating of the head/arm/actuator assembly with the disk stack during manufacturing of the disk file can be accomplished with minimal risk of damage to the disks and heads.

Fig. 1 is a side view of an actuator arm with two associated disks illustrating the load/unload mechanism in partial cutaway;

Fig. 2 is a top view of an actuator arm illustrating the load/unload mechanism and the rotatable cam for engaging the lever of the load/unload mechanism;

Fig. 3 is a perspective view illustrating a portion of the lever, the lever-supporting bracket and the leaf spring;

Fig. 4 is a perspective view of the elongated rod for flexing the suspensions;

Fig. 5A is a top view of a tab for attachment to the load beam of a suspension;

Fig. 5B is a side view of the tab shown in Fig. 5A;

Fig. 6 is a perspective view illustrating a disk stack with a typical actuator arm and the means mounted to the disk file frame for causing rotation of the lever on the actuator arms; and

Fig. 7 is a perspective view of an alternative elongated rod with a corresponding alternative tab.

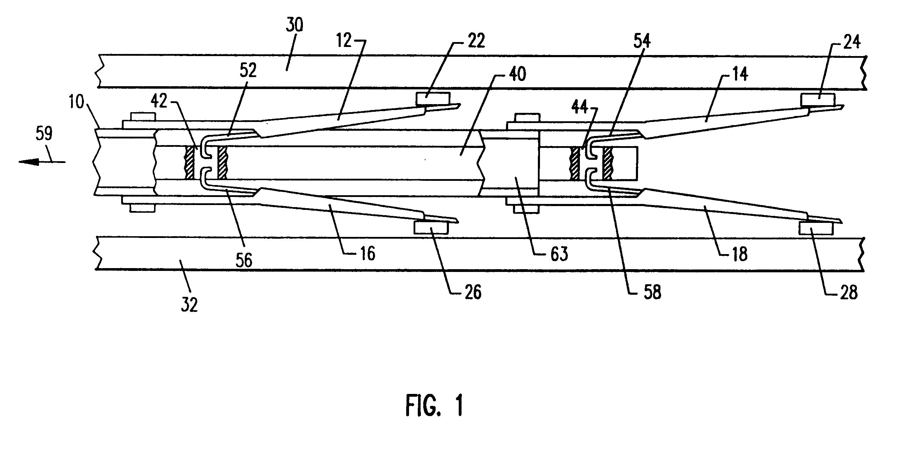

The basic concept of the load/unload device included in the present invention is illustrated in Fig. 1, wherein there is depicted an otherwise conventional actuator arm 10 which supports suspensions 12, 14, 16 and 18. The suspensions support associated sliders 22, 24, 26 and 28, respectively, which are shown in the loaded or air-bearing relationship on parallel recording disks 30, 32. Each of the sliders supports a read/write head (not shown), such as a thin film head formed on the rear or trailing end of the slider. For ease of explanation only one arm 10, two disks 30, 32 and four sliders 22, 24, 26, 28 are shown in Fig. 1. However, conventional disk files have multiple disks and multiple arms attached to a single actuator, with each arm supporting multiple sliders for two adjacent disk surfaces of two of the disks in the stack.

With one exception, the suspensions 12, 14, 16, 18 are conventional suspensions, such as the suspension described in U.S. patent 4,167,765 to Watrous, which is assigned to the same assignee as this application. Such a suspension comprises a load beam, which is mounted at one end to the actuator arm, and a flexure element which is attached to the other end of the load beam and supports the slider. The load beam provides a resilient spring action which biases the slider toward the surface of the disk, while the flexure element provides flexibility for the slider as the slider rides on the cushion of air adjacent the data surface of the rotating disk.

The device for unloading the sliders 22, 24, 26, 28 includes an elongated rod 40 movable generally through the centre of the arm 10 for flexing the suspensions 12, 14, 16, 18 away from their respective surfaces of disks 30, 32. The rod 40 has bores 42, 44 transverse to its length, the bores being illustrated in partial cutaway view in Fig. 1. Each of the suspensions is engaged with the rod 40 by means of tabs, such as typical tab 52 on suspension 12, which are located within the bores 42, 44. The tabs 52, 54, 56, 58 may be formed of stainless steel and spot-welded to the respective stainless steel load beams of suspensions 12, 14, 16, 18.

The rod 40 is shown in Fig. 1 with the tabs 52, 54, 56, 58 located generally in the centre of the bores 42, 44 and out of contact with rod 40. In this, the loaded, position of the sliders, the suspensions function in the conventional manner and are unconnected to any portion of the load/unload mechanism. When the rod 40 is moved in the direction shown by arrow 59, the tabs 52, 54, 56, 58 are engaged with rod 40 and the respective suspensions 12, 14, 16, 18 are flexed so as to move the respective sliders 20, 22, 24, 26 away from the respective surfaces of disks 30, 32, thereby unloading the heads.

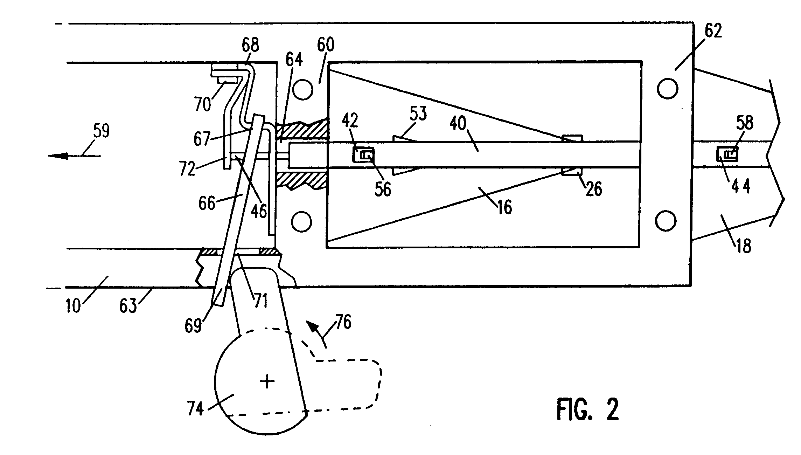

The means for moving the rod 40 to its first or unloaded position and returning it to the second or loaded position is illustrated in Fig. 2, wherein the disk 30 and suspensions 12, 14 (Fig. 1) have been omitted for ease of explanation. The rod 40 moves within central openings located within the crossmembers 60, 62 of arm 10. Crossmember 60 is shown in partial cutaway to depict the opening 64 through which the rod 40 moves. Located at one end of rod 40 is a key 46 which is attached to a lever 66. The end 69 of the lever 66 passes through an opening 71 in the U-shaped side channel 63 of arm 10. Lever 66 is rotatable about its pivot point 67 which is its point of attachment to a bracket 68. Bracket 68 is secured to the arm 10 by means of bolt 70. The end of key 46 is in contact with a leaf spring 72 which is also secured to the arm 10 by bolt 70.

The rod 40 is moved in the direction of arrow 59 to its first position by means of cam 74 which rotates in the direction shown by arrow 76 and contacts the end 69 of lever 66. This places the various components in the unloaded position indicated in Fig. 2. When the cam 74 is rotated out of contact with the end 69 of lever 66, so as to be in the position indicated by the dotted lines in Fig. 2, then leaf spring 72 moves rod 40 to its second position. In the second position, rod 40 is no longer engaged by any of the tabs 52, 54, 56, 58 on the suspensions and the suspensions are free to bias their associated sliders toward their respective disk surfaces. The leaf spring 72 maintains a force on rod 40 so that rod 40 is out of contact with the suspensions and the sliders remain loaded. The suspensions then function in the conventional manner without any contact with the load/unload mechanism. This is the loaded position indicated in Fig. 1, which illustrates the tabs 52, 54, 56, 58 in bores 42, 44 but disengaged with rod 40.

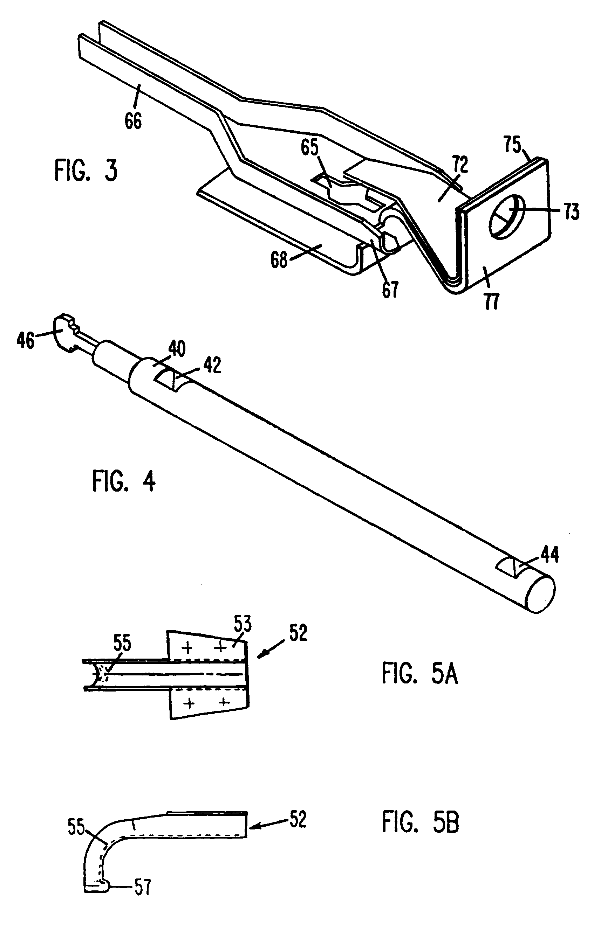

The detailed relationship between lever 66, its supporting bracket 68, and leaf spring 72 is shown in Fig. 3. The lever 66 has its pivot point 67 located on bracket 68 but it is not rigidly connected to bracket 68. Both bracket 68 and leaf spring 72 have similarly formed and mated flanges 75, 77 respectively, through which there is a hole 73. Bracket 68 and leaf spring 72 are secured to arm 10 by bolt 70 (Fig. 2) which passes through hole 73.

Fig. 4 illustrates in detail the rod 40 with transverse bores 42, 44 and attached key 46 at its end. The manner in which lever 66 is retained within arm 10 can be understood by reference to key 46 in Fig. 4 and the notched opening 65 in lever 66, as shown in Fig. 3. With the bracket 68, leaf spring 72 mounted to arm 10, and lever 66 supported at pivot point 67 on bracket 68, the load/unload mechanism is assembled by inserting rod 40 through the openings in arm crossmembers 62, 60 with bores 42, 44 in rod 40 being oriented generally parallel with crossmembers 62, 60. In this manner key 46 passes through the slotted opening 65 in lever 66.

After rod 40 has been so inserted it is rotated 90 degrees so that the bores 42, 44 are in the position shown in Fig. 2. The key 46 is now forced against lever 66 by leaf spring 72 and is prevented from passing through slotted opening 65 because it has been rotated and locked into position. Thus, lever 66 is retained within arm 10 by means of the key 46 of rod 40 and the biasing force from leaf spring 72. The suspensions 12, 14, 16, 18 (Fig. 1) are then attached to arm 10 and slightly flexed to insert tabs 52, 54, 56, 58 into the respective bores 42, 44.

An enlarged view of typical tab 52 is shown in the top and side views of Figs. 5A and 5B, respectively. Tab 52 may be formed of a single stainless steel sheet, pressed and formed in the configuration shown in Figs. 5A and 5B, so as to have a relatively flat plate portion 53 and depending hook portion 55. The flat plate portion 53 is mated with the flat load beam of the suspension 12 and spot welded to the load beam. As shown in the detailed side view of Fig. 5B, the hook portion 55 has a contact point 57 which serves as that point of tab 52 which engages rod 40 when rod 40 is moved to its first position to unload the sliders.

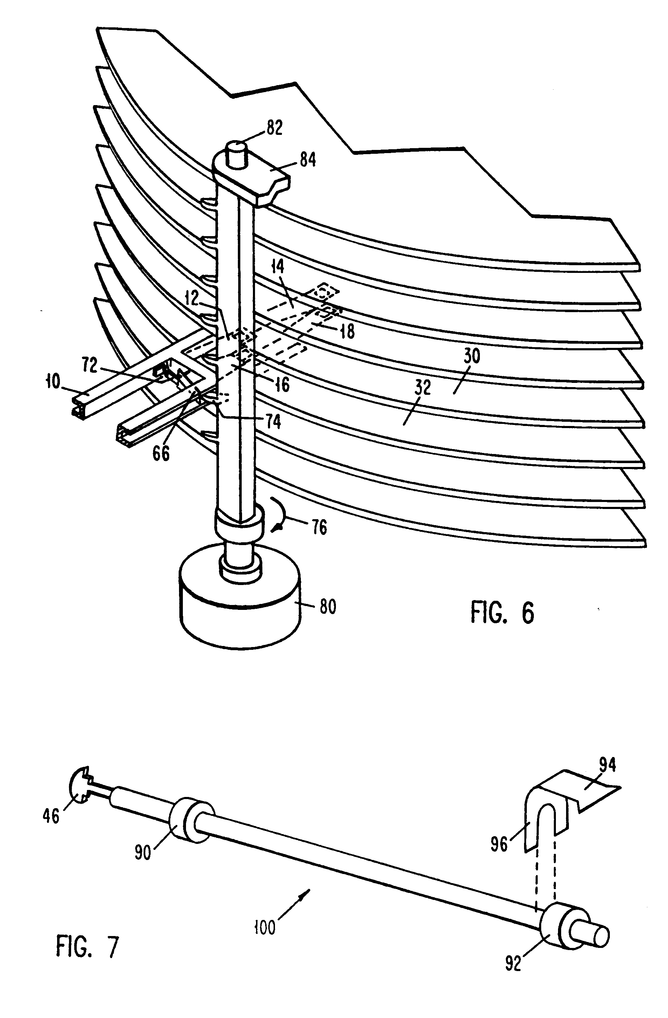

The relationship of arm 10 and disks 30, 32 to the means for rotating the lever 66 is shown in Fig. 6. A conventional disk file includes a stack of disks with typical arm 10 as one of the arms attached to the actuator (not shown). The suspensions 12, 14, 16, 18 on arm 10 are shown in dotted line. A stepper motor 80 is supported on the disk file frame (not shown). A shaft 82 extends from the stepper motor and has cam surfaces, such as typical cam 74, for contacting the respective levers on the actuator arms. The shaft 82 is supported for rotation by means of a support bracket 84 which is also mounted to the disk file frame.

Referring now to Figs. 1, 2 and 6 together, the actuator (not shown) is positioned such that the arm 10 and attached sliders 12, 14, 16, 18 are at their radially outermost position on the disks 30, 32 when the disk file is turned off and the disks are not rotating. The stepper motor 80 is rotated so that shaft 82 is turned to provide cam 74 in contact with lever 66. In this manner the lever 66 is rotated and rod 40 is positioned in engagement with the tabs on the suspensions. This is the slider unloaded position of Fig. 2.

The cam 74 remains in contact with lever 66 until the disks have reached a rotational speed sufficient to generate an air-bearing for the sliders, at which time stepper motor 80 rotates shaft 82 to move cam 74 out of contact with lever 66. As cam 74 rotates out of contact with lever 66 to the position indicated by the dotted line in Fig. 2, the leaf spring 72, which is in contact with the key 46 at the end of rod 40, moves rod 40 to the second position, i.e., the position wherein rod 40 is no longer in engagement with tabs 52, 54, 56, 58. This is the slider loaded position shown in Fig. 1. As rod 40 moves out of engagement with the tabs, the suspensions are free to bias the respective sliders toward the disks and allow the air flow between the rotating disks and the sliders to support the sliders. In this manner, the sliders are loaded to the rotating disks without contacting the disk surfaces.

When it is desired to turn off the disk file, the actuator (not shown) moves arm 10 to the radially outermost position while the disks continue to rotate at a speed above that necessary to generate the air-bearings. Stepper motor 80 is then activated to rotate shaft 82 to cause cam 74 to contact lever 66. This moves rod 40 to the direction indicated by arrow 59 and causes the suspensions with attached sliders to be flexed away from the surfaces of disks 30, 32. The sliders are then unloaded with the tabs of the suspensions engaged by rod 40. The rotation of the disks is then stopped without the sliders having contacted the disk surfaces. If it is desired that the loading and unloading should occur such that the sliders contact the disk surfaces, then the operation of the load/unload device is identical to that just described with the exception that a lower rotational speed may be used provided that it is still sufficiently high to prevent stiction. Alternatively, the loading and unloading may take place, if desired, while the disks are not rotating at all.

Rod 40 (Fig. 4) may be formed entirely of stainless steel or any suitable plastic material. Alternatively, the key 46, which serves as the end of rod 40, may be of stainless steel and inserted into the cylindrical plastic portion of rod 40. Plastic bushings may also be located in the openings in arm crossmembers 60, 62, such as opening 64 (Fig. 2), to minimise the sliding friction of rod 40.

In the above-described and illustrated embodiment, the tabs on the suspensions are in engagement with rod 40 by means of the insertion of their respective hook portions through the bores in rod 40. As shown in the alternative embodiment of Fig. 7, it is also possible to provide lateral extensions 90, 92 on modified rod 100 and modified tabs, such as tab 94, on the suspensions. In this embodiment, rod 100 does not require any bores and the extensions 90, 92 engage slotted fingers on the tabs, such as finger 96 on tab 94, as the rod 100 is moved to the unloaded position. Similarly, the extensions are moved out of contact with the slotted fingers when rod 100 is moved to the loaded position to allow the suspensions to function in the conventional manner.

## Claims

1. A disk file comprising:

    a rotatably mounted data storage disk (30),

    rotation means for rotating the disk,

    at least one air-bearing slider (22) mounting a transducing head for reading data from the disk,

    a relatively rigid head support arm (10),

    a resilient suspension (12) attaching the slider to the arm and being biased towards the disk to load the slider thereon and

    a head load/unload mechanism including a rigid elongated actuating member (40) mounted on the support arm for longitudinal movement along said arm and a drive means (46,66,74) for driving the actuating member to load and unload the head,

the suspension (12) and actuating member (40) including complementary features (52,42) which engage upon movement of the actuating member in a first direction to unload the slider by flexing the suspension (12) against its bias and which disengage upon movement of the actuating member in the opposite direction to permit the suspension to flex with its bias, thereby to load the slider towards the disk, the disk file being

characterised in that the complementary feature of the suspension (12) is a hooked extension (52) of the suspension and the complementary feature of the actuating member (40) is a depression (42) formed in the actuating member in such a way that the hooked extension lies in the depression at all times.

2. A disk file as claimed in claim 1 in which the depression is a hole (42) formed through the actuating member perpendicular to its length.

3. A disk file as claimed in claim 1 or claim 2 in which the drive means (46,66,74) for moving the actuating member (40) comprises a lever (66), rotatably mounted to the arm and operable to move the actuating member (40) in said first direction, thereby to unload the slider from the disk surface, and a spring (72) tending to move the actuating member in said opposite direction, thereby to load the slider to the disk surface when the lever (66) is released.

4. A disk file as claimed in claim 3 wherein the head support arm (10) is movable to place the slider at different radial positions relative to the disk axis and including means (74,80) operable to contact and rotate the lever (66) to unload the slider when the slider is at its outermost radial position attainable relative to the disk and for releasing the lever to load the slider when the slider is in any other radial position.

5. A disk file as claimed in any preceding claim including a plurality of data storage disks (30,32) and a plurality of sliders (22,24,26,28), each mounted to the arm by a suspension (12,14,16,18), the actuating member having a plurality of complementary features (42,44), enagagable by complementary features (52,54,56,58) on the suspensions.

## Revendications

1. Unité de disque comprenant :
    - un disque de stockage de données (30) monté rotatif,

- un moyen pour entraîner le disque en rotation,

- au moins un patin sur paliers à air (22) supportant une tête de lecture des données du disque,

- un bras de support de tête relativement rigide (10),

- une suspension élastique (12) maintenant le patin au bras et étant sollicitée vers le disque pour appliquer le patin sur celui-ci,

- un mécanisme pour abaisser et relever la tête comprenant un élément d'actionnement (40) rigide, allongé, monté sur le bras de support pour permettre un mouvement longitudinal le long dudit bras et un moyen de commande (46, 66, 74) pour commander l'élément d'actionnement pour abaisser et relever la tête,

la suspension (12) et l'élément d'actionnement (40) comprenant des éléments complémentaires (52, 42) qui coopèrent suite au mouvement de l'élément d'actionnement, dans une première direction pour relever le patin en faisant fléchir la suspension (12) contre sa sollicitation, et qui se libèrent suite au mouvement de l'élément d'actionnement dans la direction opposée pour permettre à la suspension de fléchir selon sa sollicitation pour abaisser ainsi le patin vers le disque, l'unité de disque étant caractérisée en ce que l'élément complémentaire de la suspension (12) est un prolongement à crochet (52) de la suspension et l'élément complémentaire de l'élément d'actionnement (40) est une dépression (42) formée dans l'élément d'actionnement, de façon que le prolongement à crochet se tienne en permanence dans la dépression.

2. Unité de disque selon la revendication 1, dans laquelle la dépression est un trou (42) formé à travers l'élément d'actionnement, perpendiculairement à sa longueur.

3. Unité de disque selon la revendication 1 ou 2, dans laquelle le moyen de commande (46, 66, 74) pour déplacer l'élément d'actionnement (40), comprend un levier (66), monté à rotation sur le bras et capable de déplacer l'élément d'actionnement (40) dans ladite première direction, pour relever ainsi le patin de la surface du disque, et un ressort (72) tendant à déplacer l'élément d'actionnement dans ladite direction opposée, pour abaisser ainsi le patin sur la surface du disque lorsque le levier (66) est dégagé.

4. Unité de disque selon la revendication 3, dans laquelle le bras de support (10) de la tête est mobile de façon à placer le patin dans différentes positions radiales par rapport à l'axe du disque et comprenant des moyens (74, 80) pouvant être actionnés pour entrer en contact avec le levier (66) et le faire pivoter pour relever le patin lorsque celui-ci est dans sa position radiale la plus écartée par rapport au disque, et pour dégager le levier afin d'abaisser le patin, lorsque celui-ci est dans une quelconque autre position radiale.

5. Unité de disque selon l'une quelconque des revendications précédentes, comprenant une pluralité de disques de stockage de données (30, 32) et une pluralité de patins (22, 24, 26, 28), chacun monté au bras par une suspension (12, 14, 16, 18), l'élément d'actionnement ayant une pluralité d'éléments complémentaires (42, 44), engageables par des éléments complémentaires (52, 54, 56, 58) sur les suspensions.

**Patentansprüche**

1. Plattenspeicher, der aufweist:

eine drehbar montierte Datenspeicherplatte (30),

Drehmittel zum Drehen der Platte,

zumindest einen Luftpolster-Gleiter (22), der einen Wandlerkopf zum Lesen von Daten von der Platte trägt,

einen verhältnismäßig steifen Kopfabstützarm (10),

eine elastische Aufhängung (12), welche den Gleiter mit dem Arm verbindet und in Richtung der Platte vorgespannt ist, um den Gleiter dagegen zu drücken, und

einen Kopf-Aufsetz/Abhebemechanismus mit einem länglichen, starren Betätigungsglied (40), das an dem Abstützarm für eine Längsbewegung längs des Armes montiert ist, und mit einem Antriebsmittel (46, 66, 74), um das Betätigungsglied zum Aufsetzen und Abheben des Kopfes zu bewegen,

wobei die Aufhängung (12) und das Betätigungsglied (40) komplementäre Einrichtungen (52, 42) aufweisen, die bei Bewegung des Betätigungsgliedes in eine erste Richtung ineinander eingreifen, um durch Biegen der Aufhängung (12) gegen ihre Vorspannung den Gleiter abzuheben und sich bei Bewegung des Betätigungsgliedes in die entgegengesetzte Richtung voneinander lösen, um der Aufhängung ein Biegen mit ihrer Vorspannung zu ermöglichen und hiedurch den Gleiter in Richtung der Platte zu drücken, wobei der Plattenspeicher

dadurch gekennzeichnet ist, daß die komplementäre Einrichtung der Aufhängung eine hakenförmige Verlängerung (52) der Aufhängung ist und die komplementäre Einrichtung des Betätigungsgliedes (40) eine Vertiefung (42) ist, die so in dem Betätigungsglied ausgebildet ist, daß die hakenförmige Verlängerung zu jeder Zeit in der Vertiefung liegt.

2. Plattenspeicher nach Anspruch 1, bei welchem die Vertiefung ein durch das Betätigungsglied, senkrecht zu dessen Länge ausgebildetes Loch (42) ist.

3. Plattenspeicher nach Anspruch 1 oder 2, bei welchem das Antriebsmittel (46, 66, 74) zum Bewegen des Betätigungsgliedes (40) einen Hebel (66) besitzt, der drehbar an dem Arm montiert ist und zur Bewegung des Betätigungsgliedes (40) in die genannte erste Richtung betreibbar ist, um hiedurch den Gleiter von der Plattenoberfläche abzuheben, sowie eine Feder (72) besitzt, welche das Betätigungsglied in die entgegengesetzte Richtung zu bewegen sucht, um hiedurch den Gleiter gegen die Plattenoberfläche zu drücken, falls der Hebel (66) gelöst ist.

4. Plattenspeicher nach Anspruch 3, bei welchem der Kopfabstützarm (10) bewegbar ist, um den Gleiter in unterschiedliche radiale Lagen bezüglich der Plattenachse zu bewegen und Mittel (74, 80) aufweist, die betreibbar sind, um den Hebel (66) zu berühren und zu verdrehen, um den Gleiter abzuheben, falls sich der Gleiter an der bezüglich der Platte äußersten, erreichbaren radialen Lage befindet, und zum Lösen des Hebels, um den Gleiter aufzusetzen, falls sich der Gleiter in irgendeiner anderen radialen Lage befindet.

5. Plattenspeicher nach irgendeinem der vorherigen Ansprüche, mit einer Mehrzahl von Datenspeicherplatten (30, 32) und mit einer Mehrzahl von Gleitern (22, 24, 26, 28), die je mit dem Arm mittels einer Aufhängung (12, 14, 16, 18) verbunden sind, wobei das Betätigungsglied eine Mehrzahl von komplementären Einrichtungen (42, 44) besitzt, in die komplementäre Einrichtungen (52, 54, 56, 58) an den Aufhän-

gungen eingreifen.

FIG. 1

FIG. 2

FIG. 3

66

65

72

75

68

67

77

73

46

FIG. 4

40

42

44

55

53

52

FIG. 5A

55

52

FIG. 5B

57

FIG. 6

FIG. 7